# EUROPÄISCHE PATENTSCHRIFT

(11) **EP 4 339 012 B1**
(45) Veröffentlichungstag und Bekanntmachung des Hinweises auf die Patenterteilung: **11.06.2025**
(21) Anmeldenummer: 23196849.6
(22) Anmeldetag: 12.09.2023
(51) Int. Cl.: B60L 53/16, B60L 53/30, H02G 3/18

(54) **BORDSTEIN-, PFLASTERSTEIN- ODER RANDSTEIN-LADESYSTEM ZUM LADEN EINES ENERGIESPEICHERS EINES ELEKTRISCH ANGETRIEBENEN FAHRZEUGS**
CURB, PAVING STONE OR CURB STONE CHARGING SYSTEM FOR CHARGING AN ENERGY STORE OF AN ELECTRICALLY DRIVEN VEHICLE
SYSTÈME DE CHARGEMENT DE BORDURE, DE PAVÉ OU DE BORDURE POUR CHARGER UN ACCUMULATEUR D'ÉNERGIE D'UN VÉHICULE À PROPULSION ÉLECTRIQUE

(30) Priorität: 15.09.2022 DE 102022123670
(43) Veröffentlichungstag der Anmeldung: 20.03.2024
(73) Patentinhaber: Pierburg GmbH, 41460 Neuss (DE)
(72) Erfinder: HEMSING, Axel, 40545 Düsseldorf (DE); STRACKE, Dr., Felix, 40211 Düsseldorf (DE); HOFFMANN, Jens, 47249 Duisburg (DE); BRETZ, Andreas, 41199 Mönchengladbach (DE)
(74) Vertreter: terpatent PartGmbB

(56) Entgegenhaltungen:
- WO-A1-2021/250427
- DE-A1- 102020 205 561
- GB-A- 2 572 752
- GB-A- 2 589 326

## Beschreibung

Die Erfindung betrifft ein Bordstein-, Pflasterstein- oder Randstein-Ladesystem zum Laden eines Energiespeichers eines elektrisch angetriebenen Fahrzeugs mit einer Bordstein-, Pflasterstein- oder Randsteineinheit mit einer im eingebauten Zustand eine Geh- oder Fahrfläche bildenden Oberfläche, einer Ladebuchse mit einer Einstecköffnung, über die elektrische Kontakte der Ladebuchse zugänglich sind, und die an der Bordstein-, Pflasterstein- oder Randsteineinheit zumindest indirekt befestigt ist, einem Stecker, der in die Einstecköffnung der Ladebuchse zur Kontaktierung der Kontakte der Ladebuchse einsteckbar ist, und einem Buchsendeckel zur Abdeckung der Einstecköffnung der Ladebuchse außerhalb des Ladevorgangs, der über eine Schwenkachse zur Bordstein-, Pflasterstein- oder Randsteineinheit drehbar gelagert ist.

Derartige Bordstein-, Pflasterstein- oder Randstein-Ladevorrichtungen sind im Bordstein, Pflasterstein oder im Randstein integrierte Aufladestationen oder Bord-, Pflaster- oder Randsteine, in denen zumindest eine Ladebuchse integriert ist, die an eine zentrale Ladestation angeschlossen sind. Über die Ladebuchsen kann eine elektrische Verbindung zu einem elektrisch angetriebenen Fahrzeug hergestellt werden, um dessen Energiespeicher beziehungsweise dessen Batterie aufzuladen. Dies betrifft insbesondere rein elektrisch angetriebene Fahrzeuge aber auch Hybridfahrzeuge. Aufladbare Fahrzeuge können sowohl Personenkraftwagen als auch Lastkraftwagen, Motorräder oder elektrische Fahrräder sein.

Durch die neue Gesetzgebung, das steigende Klimaschutzinteresse der Bevölkerung sowie die verbesserte Wirtschaftlichkeit elektrifizierter Fahrzeuge ist zu erwarten, dass der Anteil elektrischer Fahrzeuge insbesondere in den innerstädtischen Bereichen extrem steigen wird, so dass die zur Verfügung stehende Ladeinfrastruktur in hohem Maße ausgebaut werden muss, was bedeutet, dass ein Teil vorhandener Parkplätze oder Gehwege mit entsprechenden Auflademöglichkeiten versehen werden muss, um die individuelle Mobilität auch in Zukunft sicherzustellen.

Bekannte Konzepte sehen hierfür die Nutzung von Straßenlaternen, zusätzlich zu installierende Ladesäulen oder Wallboxen an Hauswänden vor. Bei allen diesen Konzepten entsteht zusätzlicher Platzbedarf und eine Störung der Fußgänger durch die zu verwendenden Aufladekabel.

Aus diesem Grund sind Ladesysteme bekannt geworden, bei denen die Aufladevorrichtungen oder zumindest die Ladebuchsen in den Bordstein beziehungsweise den Randstein oder den Gehweg bildende Pflastersteine integriert sind. In diesem Zusammenhang sei darauf hingewiesen, dass im Sinne der Erfindung ein Pflasterstein, Bordstein oder Randstein nicht zwangsweise ein Steinelement aufweisen muss. Dies bedeutet, dass die Pflastersteine, Bordsteine oder Randsteine auch aus verschiedenen Materialien, wie Kunststoff-, insbesondere Faserverbundkunststoff, oder Metall, Beton oder Steine enthaltende Kunststoffe zusammengesetzt werden können. Dabei können auch verschiedene Teile aus verschiedenen Materialien zusammengesetzt werden und die Pflaster-, Bordstein- oder Randsteineinheit bilden.

Die Integration der Ladebuchse oder der kompletten Ladeeinheit in den Bordstein hat den Vorteil, dass keine Ladesäulen die Gehsteige versperren und so den optischen Eindruck stören. Auch kann vermieden werden, dass Ladekabel quer über den Gehweg ragen und für Fußgänger Stolperfallen bilden. Stattdessen entsteht kein zusätzlicher Platzbedarf, sondern lediglich eine Nutzung ohnehin vorhandener Infrastruktur. Auch können Beschädigungen der Ladeinfrastruktur durch Unfälle mit Fahrzeugen vorgebeugt werden.

Eine spezielle Ausbildung eines solchen Bordsteins mit Elektronik zum Laden eines Fahrzeugs ist aus der GB 2 591 830 A bekannt. Dieser Bordstein ist modular aufgebaut und weist ein Basiselement auf, an dem ein austauschbarer Bordsteinkopf eingesetzt werden kann, der elektronische Elemente sowie eine Ladebuchse beinhalten kann. In diesem Behälter sind beispielsweise drahtlose Telekommunikationstechnologien und -infrastrukturen, wie Wi-Fi, Bluetooth, oder Parksensoren oder auch Batteriepakete integriert. Die Ladebuchse wird von außen zugänglich in einer Ausnehmung des Oberteils befestigt und steht senkrecht zur Fahrbahnoberfläche. Entsprechend kann Schmutz und Wasser in die Ladebuchse eindringen.

Des Weiteren ist aus der GB 2 602 632 ein Bordstein mit einer Ladebuchse bekannt, die entweder zur Fahrbahnoberfläche weist oder ebenfalls senkrecht zur Fahrbahnoberfläche angeordnet ist. In beiden Fällen ist ein Buchsendeckel vorgesehen, der geöffnet werden muss, um den Stecker in die Ladebuchse einstecken zu können.

Außerdem ist aus WO2021/250427 A1 ein Bordstein mit eingelassener Ladebuchse bekannt, wobei diese mit einem Ladebuchsendeckel versehen ist.

Problematisch an den genannten Modulen ist jedoch, dass diese häufig im Freien angeordnet sind und somit den Wettereinflüssen ausgesetzt sind, jedoch nicht vor Verschmutzung und Nässe geschützt sind. Entsprechend wird der Buchsendeckel mit fortschreitender Standzeit verschmutzen. Dies hat zur Folge, dass der Nutzer bei der manuellen Öffnung ebenfalls in Kontakt mit den Verunreinigungen kommt, wenn er nicht zusätzliche Handschuhe oder andere Hilfsmittel verwendet. Des Weiteren ist es für den Nutzer erforderlich sich tief zu bücken, um die Ladebuchse zu erreichen und es besteht die Gefahr sich die Finger am Buchsendeckel einzuklemmen. Auch sind vereiste Buchsendeckel schwierig zu lösen.

Es stellt sich daher die Aufgabe, ein Bordstein-, Pflasterstein- oder Randstein-Ladesystem zum Laden eines Energiespeichers eines elektrisch angetriebenen Fahrzeugs bereit zu stellen, mit welchem Verschmutzungen des Nutzers möglichst verhindert werden, ohne zusätzliche Hilfsmittel zum Öffnen des Buchsendeckels und Einstecken des Steckers nutzen zu müssen. Des Weiteren sollten Verletzungen vermieden werden und das Öffnen des Buchsendeckels auch bei Vereisungen vereinfacht werden.

Diese Aufgabe wird durch ein Bordstein-, Pflasterstein- oder Randstein-Ladesystem zum Laden eines Energiespeichers eines elektrisch angetriebenen Fahrzeugs mit den Merkmalen des Hauptanspruchs 1 gelöst.

Ein erfindungsgemäßes Bordstein-, Pflasterstein- oder Randstein-Ladesystem zum Laden eines Energiespeichers eines elektrisch angetriebenen Fahrzeugs weist eine Bordstein-, Pflasterstein- oder Randsteineinheit mit einer im eingebauten Zustand eine Geh- oder Fahrfläche bildenden Oberfläche auf. Diese Einheit kann mehrteilig ausgebildet sein und beispielsweise einen Grundkörper mit einem Deckel aufweisen. An dieser Bordstein-, Pflasterstein- oder Randsteineinheit ist eine Ladebuchse zumindest indirekt befestigt. Dies bedeutet, dass die Buchse direkt am Deckel oder Grundkörper oder aber über weitere Zwischenelemente an diesen Teilen befestigt sein kann. Die Ladebuchse weist eine Einstecköffnung auf, über die elektrische Kontakte der Ladebuchse zugänglich sind. Diese können je nach Ausführungsform entweder in die Einstecköffnung hineinragen oder im axial unmittelbar hinter der Einstecköffnung liegenden Bereich für entsprechend vorstehende Kontakte eines Steckers zugänglich sein. Unter einer Einstecköffnung wird der Bereich einer Ladebuchse verstanden, in den ein passender Stecker beim Herstellen der elektrischen Verbindung eingeschoben wird, und der üblicherweise durch eine sich radial erstreckende Wand axial begrenzt wird. Des Weiteren weist das Ladesystem einen entsprechend korrespondierenden Stecker auf, der in die Einstecköffnung der Ladebuchse zur Kontaktierung der Kontakte der Ladebuchse eingesteckt werden kann, um eine elektrische Verbindung herzustellen. Die Ladebuchse wird durch einen Buchsendeckel geschützt, der die Einstecköffnung der Ladebuchse außerhalb des Ladevorgangs abdeckt und zum Herstellen der elektrischen Verbindung von der Ladebuchse abgehoben werden muss. Hierzu ist der Buchsendeckel über eine Schwenkachse zur Bordstein-, Pflasterstein- oder Randsteineinheit drehbar gelagert. Die Befestigung dieser Lagerung kann entweder an einem Teil der Bordstein-, Pflasterstein- oder Randsteineinheit selbst ausgebildet sein oder an einem mit dieser Einheit verbundenen Bauteil, wie dies beispielswiese bei einer schwenkbaren oder hebbaren Buchse der Fall ist. Erfindungsgemäß weist der Stecker an einem Außenumfang seines Gehäuses eine Ausnehmung auf und der Buchsendeckel weist an seinem Außenumfang gegenüberliegend zur Schwenkachse eine Ausbuchtung auf, deren nach außen weisendes Ende in der Ausnehmung aufnehmbar ist. Entsprechend kann der Stecker so zum Buchsendeckel geführt werden, dass die die Ausnehmung begrenzenden Wände des Steckers die Ausbuchtung umschließen und somit die Ausbuchtung zumindest teilweise oder auch vollständig in der Ausnehmung aufgenommen wird. Dies hat zur Folge, dass ein Nutzer das Ladekabel seines Fahrzeugs in sauberem Zustand aus dem Kofferraum entnehmen kann und mit der daran ausgebildeten Ausnehmung gegen die Ausbuchtung bewegt, so dass diese in der Ausnehmung zum Liegen kommt. Bei einem folgenden Anheben des Steckers wird somit auch der Buchsendeckel angehoben, ohne diesen mit den Händen berühren zu müssen. Beim Heben wird die Ausbuchtung am Buchsendeckel langsam aus der Ausnehmung hinausgleiten, während der Stecker nunmehr gegenüberliegend zur Unterseite des Buchsendeckels angeordnet ist und entlang dieser Unterseite in die Einstecköffnung verschoben werden kann. Entsprechend wird es dem Nutzer ermöglicht, eine Öffnung des Buchsendeckels und ein Einführen des Steckers in die Ladebuchse vorzunehmen, ohne dass dieser zusätzliche Hilfsmittel benötigt oder den Buchsendeckel per Hand bewegen muss. So werden auch Verletzungen an der Hand vermieden und der Nutzer muss sich weniger tief herabbücken. Des Weiteren ist es einfacher durch die vorhandene Hebelwirkung eine größere Kraft zum Öffnen aufzubringen, wenn der Buchsendeckel vereist sein sollte.

Vorzugsweise ist das nach außen weisende Ende der Ausbuchtung bezüglich seiner Breite korrespondierend zur Ausnehmung geformt. Dies bedeutet, dass die Ausbuchtung mit einem relativ geringen umlaufenden Spalt in die Ausnehmung eingeführt werden kann, wodurch eine genauere Führung des Buchsendeckels ermöglicht wird. Die Höhe der Ausbuchtung sollte kleiner gewählt werden als die Höhe der Ausnehmung.

Entsprechend ist der Stecker derart zum geschlossenen Buchsendeckel bewegbar, dass die Ausbuchtung des Buchsendeckels zumindest teilweise in die Ausnehmung des Steckers greift. Das nach außen weisende Ende, welches in die Ausnehmung greift, ist entsprechend Teil der Ausbuchtung, kann jedoch auch die komplette Ausbuchtung bilden.

In einer besonderen Ausführungsform weist die Ladebuchse einen Verriegelungsaktor mit einem Bolzen auf, der während des Ladevorgangs in die Ausnehmung am Stecker greift. Es kann somit ein Standardstecker, wie beispielsweise ein Typ 2- Stecker verwendet werden, der zur möglichen Verriegelung im eingesteckten Zustand eine entsprechende Ausnehmung aufweist, um zu verhindern, dass ein versehentliches oder unautorisiertes Abziehen des Steckers vor Beendigung des Ladevorgangs erfolgt.

Vorzugsweise ist eine Oberfläche des Buchsendeckels im Wesentlichen in der gleichen Ebene angeordnet, wie die die Geh- oder Fahrfläche bildende Oberfläche der Bordstein-, Pflasterstein- oder Randsteineinheit, wodurch verhindert wird, dass der Buchsendeckel durch Fahrzeuge oder Personen zusätzlich belastet wird oder Stolperfallen gebildet werden.

In einer besonders vorteilhaften Ausführungsform weist die Oberfläche der Bordstein-, Pflasterstein- oder Randsteineinheit an der zur Ausbuchtung des Buchsendeckels gelegenen Seite der Ladebuchse eine Vertiefung auf, die zumindest im zur Ausbuchtung benachbarten Bereich einen größeren Abstand zur Oberfläche außerhalb der Vertiefung aufweist als ein am weitesten von der Oberfläche außerhalb der Vertiefung entfernter Punkt der Ausbuchtung. Hierdurch wird ein Raum unterhalb der Ausbuchtung geschaffen, so dass ein Abschnitt des Steckers zwischen seinem axialen Ende und der Ausnehmung axial unter den Buchsendeckel geführt werden kann, wodurch eine gute Zugänglichkeit der Ausbuchtung hergestellt wird.

Besonders bevorzugt ist es, wenn der Abstand einer Oberfläche der Vertiefung im unterhalb der Ausbuchtung des Buchsendeckels der Ladebuchse liegenden Bereich zur Ausbuchtung des Buchsendeckels im Wesentlichen dem Abstand eines axialen Endes des Steckers zur Ausnehmung entspricht. In diesem Fall kann der Stecker auf die Oberfläche der Vertiefung aufgesetzt werden, wodurch die Ausnehmung des Steckers durch eine Bewegung des Steckers zum Buchsendeckel automatisch um die Ausbuchtung des Buchsendeckels greift, wodurch die Handhabung deutlich vereinfacht wird.

In einer besonderen Ausführung entspricht die Breite der Vertiefung zumindest der Querschnittsbreite eines Einsteckabschnitts des Steckers und die Länge der Vertiefung ist in Richtung zum Buchsendeckel mindestens so groß wie die Querschnittslänge des Einsteckabschnitts des Steckers, so dass auch ein seitlicher Versatz der Ausbuchtung zur Ausnehmung beim Einschieben verhindert wird und der Stecker dennoch in Richtung des Buchsendeckels verschiebbar ist. Unter Querschnittsbreite und Querschnittslänge sind die beiden senkrecht zueinander liegenden Ebenen des Steckers zu verstehen, wobei die Betrachtung sich auf die korrekte Einsteckrichtung des Steckers in die Ladebuchse bezieht. Die Querschnittslänge wird in dieser Stellung in Richtung vom Scharnier des Buchsendeckels zur Ausbuchtung gemessen und die Breite senkrecht hierzu.

Die Oberfläche der Vertiefung bildet vorteilhafterweise eine gerade Ebene, so dass die ebenfalls eine gerade Oberfläche ausbildenden axialen Enden der Wände des Steckers kippbewegungsfrei auf der Ebene geführt werden kann.

Dabei kann die Oberfläche der Vertiefung parallel zur die Geh- oder Fahrfläche bildenden Oberfläche der Bordstein-, Pflasterstein- oder Randsteineinheit angeordnet sein, wodurch eine gerade Führung der Ausnehmung zur Aufnahme der Ausbuchtung vorliegt.

In einer alternativen bevorzugten Ausbildung ist die Oberfläche der Vertiefung zur Ladebuchse hin schräg abfallend ausgebildet. Hier erfolgt ebenfalls eine gerade Führung, wobei zusätzlich durch die Schräge ein möglicher Ablauf von in der Vertiefung vorhandenem Wasser hergestellt wird.

Um einen zuverlässigen Wasserablauf herzustellen ist die Ladebuchse von einer Wasserablaufebene umgeben, zu der die Oberfläche der Vertiefung schräg abfallend ausgebildet ist. So wird verhindert, dass sich Wasser auf der Oberfläche der Vertiefung sammelt. Das Wasser kann von dieser Ebene beispielsweise über einen Kanal zur Vorderseite der Bordstein-, Pflasterstein- oder Randsteineinheit abgeführt werden, indem die Wasserablaufebene schräg abfallend zum Kanal ausgebildet wird.

Die Vertiefung ist vorzugsweise an einem Schutzdeckel der Bordstein-, Pflasterstein- oder Randsteineinheit ausgebildet, der insbesondere aus Edelstahl oder einem verstärkten Kunststoff ist, so dass die Herstellung der Vertiefung einfach ist und gleichzeitig eine ausreichende Festigkeit gegeben ist.

Der Buchsendeckel ist vorzugsweise über ein Scharnier am Schutzdeckel befestigt, wodurch ein einfaches Klappen ermöglicht wird. Des Weiteren ist der Buchsendeckel unabhängig von der Ladebuchse, so dass diese entfernt und ausgetauscht werden kann, ohne dass der Buchsendeckel entfernt werden muss.

Des Weiteren ist es vorteilhaft, wenn am Buchsendeckel ein Vorsprung ausgebildet ist, der zur Ausbuchtung in Richtung des Scharniers versetzt sich von einer Unterseite des Buchsendeckels in die Vertiefung erstreckt und der im geschlossenen Zustand der Ladebuchse zwischen der Ladebuchse und der Ausbuchtung angeordnet ist. Dieser Vorsprung dient als Führungsabschnitt des Buchsendeckels beim Einstecken des Steckers in die Ladebuchse nach dem Öffnen des Buchsendeckels.

In einer hierzu weiterführenden Ausführungsform ist im Vorsprung des Buchsendeckels eine Öffnung ausgebildet, in die außerhalb des Ladevorgangs bei geschlossenem Buchsendeckel ein Verriegelungsstift eines Verriegelungsaktors greift. Entsprechend dient dieser Vorsprung gleichzeitig zur Verriegelung der Ladebuchse außerhalb der Ladezeiten.

Es wird somit ein Bordstein-, Pflasterstein- oder Randstein-Ladesystem zum Laden eines Energiespeichers eines elektrisch angetriebenen Fahrzeugs geschaffen, mit welchem ein verschmutzungsfreies Anheben des schützenden Buchsendeckels durch den Nutzer ermöglicht wird, wobei Standardstecker genutzt werden können. Auf zusätzliche Hilfsmittel kann verzichtet werden. Auch kann eine Sammlung von Wasser oder Dreck im Betätigungsbereich verhindert werden. Das Öffnen des Buchsendeckels wird erleichtert, da der Nutzer sich weniger bücken muss, eine größere Kraft aufbringen kann und eine Verletzung der Finger beim Öffnen ausgeschlossen wird.

Ein nicht beschränkendes Ausführungsbeispiel eines erfindungsgemäßen Bordstein-, Pflasterstein- oder Randstein-Ladesystems zum Laden eines Energiespeichers eines elektrisch angetriebenen Fahrzeugs wird am Beispiel eines Bordstein-Ladesystems nachfolgend anhand der Figuren beschrieben.

Die Figur 1 zeigt eine Prinzipskizze einer Straße mit einem erfindungsgemäßen Bordstein-Ladesystem in Draufsicht.

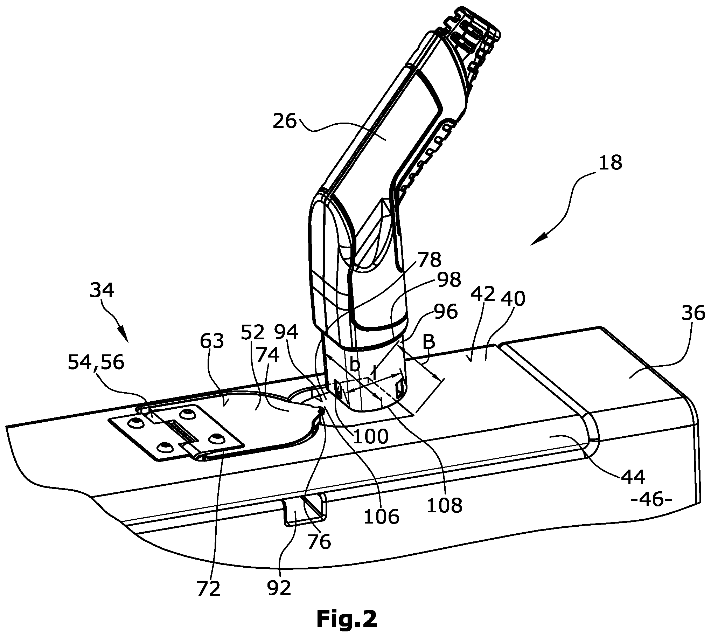

Die Figur 2 zeigt eine perspektivische Seitenansicht eines Ausschnitts eines erfindungsgemäßen Bordstein-Ladesystems in einer ersten Position vor dem Öffnen des Buchsendeckels.

Die Figur 3 zeigt eine perspektivische Seitenansicht des Ausschnitts des erfindungsgemäßen Bordstein-Ladesystems in einer zweiten Position zu Beginn des Öffnungsvorgangs.

Die Figur 4 zeigt eine perspektivische Seitenansicht des Ausschnitts des erfindungsgemäßen Bordstein-Ladesystems in einer dritten Position während des Öffnungsvorgangs des Buchsendeckels.

Die Figur 5 zeigt eine perspektivische Seitenansicht des Ausschnitts des erfindungsgemäßen Bordstein-Ladesystems in einer vierten Position kurz vor Abschluss des Öffnungsvorgangs des Buchsendeckels.

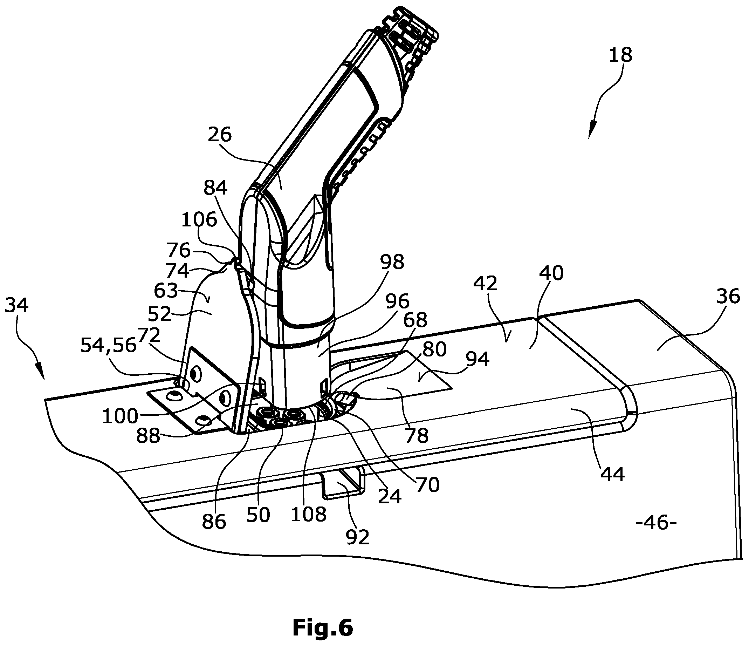

Die Figur 6 zeigt eine perspektivische Seitenansicht des Ausschnitts des erfindungsgemäßen Bordstein-Ladesystems in einer fünften Position nach Abschluss des Öffnungsvorgangs des Buchsendeckels.

Die Figur 7 zeigt eine perspektivische Seitenansicht eines Ausschnitts eines erfindungsgemäßen Bordstein-Ladesystems in einer sechsten Position kurz nach Abschluss des Öffnungsvorgangs des Buchsendeckels und Einstecken des Steckers.

Die Figur 8 zeigt eine Seitenansicht der Ladebuchse in geschnittener Darstellung mit eingestecktem Stecker.

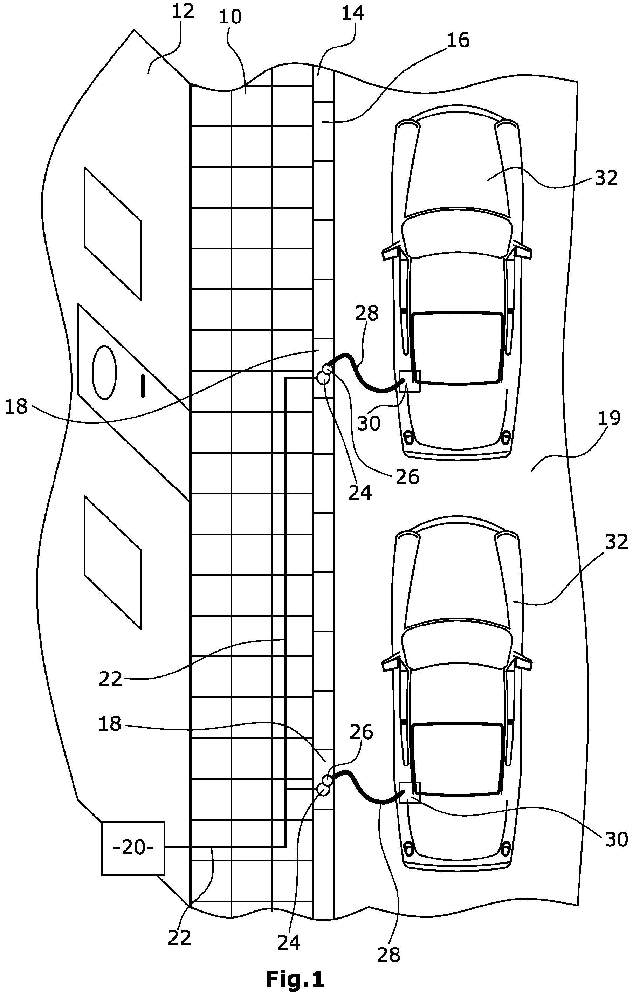

In der Figur 1 ist eine Geh- oder Fahrfläche 10 in Form eines Bürgersteigs dargestellt, der an seiner einen Seite durch eine Hauswand 12 und an der anderen Seite durch einen Bordsteinrand 14 begrenzt ist, der durch mehrere Steinelemente 16 und erfindungsgemäße Bordstein-Ladevorrichtungen 18 gebildet wird und eine Begrenzung zur Straße 19 ausbildet. An der vom Bordsteinrand 14 abgewandten Seite des Bürgersteigs befindet sich eine Energiequelle 20 in Form eines mit dem Stromnetz verbundenen Stromanschlusses. Die Energiequelle 20 ist über unterirdische Energieversorgungskabel 22 mit den Bordstein- oder Randstein-Ladevorrichtungen 18 verbunden. An den Bordstein-Ladevorrichtungen 18 sind Ladebuchsen 24 angeordnet, in die ein Stecker 26 gesteckt ist, welcher über ein Kabel 28 mit einem Energiespeicher 30, insbesondere einer Batterie eines elektrisch betriebenen Fahrzeugs 32 verbunden ist, so dass dieser Energiespeicher 30 über die Energiequelle 20 aufgeladen werden kann. Die Bordstein-Ladevorrichtungen bilden mit den Steckern ein Bordstein-Ladesystem.

Die in den Figuren dargestellte Bordstein-Ladevorrichtung 18 besteht aus einer Bordstein-Einheit 34, welche einen Grundkörper 36, der beispielsweise aus einem Beton oder einem Kunststoff hergestellt ist und Faserverstärkungen oder Bewehrungen aufweisen kann, und in dem ein Aufnahmeraum 38 ausgebildet ist, in den zumindest das Energieversorgungskabel 22 ragt, aber auch verschiedene elektronische Bauteile zum Laden angeordnet sein können. Der Aufnahmeraum 38 kann insbesondere im Wesentlichen hohlquaderförmig ausgebildet sein und weist eine zur Oberfläche der Geh- oder Fahrfläche 10 offene Seite auf, die durch einen Schutzdeckel 40 verschlossen ist, dessen nach außen weisende Oberfläche 42 den äußeren Teil der Geh- oder Fahrfläche 10 bildet.

Der Schutzdeckel 40, der insbesondere aus Edelstahl oder einem verstärkten Kunststoff ist, ist am Grundkörper 36 oder einem nicht dargestellten, im Aufnahmeraum 38 angeordneten Aufnahmebehälter befestigt und verschließt die nach oben weisende, offene Seite des Aufnahmeraums 38, insbesondere unter Zwischenlage einer Dichtung, welche nicht dargestellt ist. Zusätzlich liegt der Schutzdeckel 40 auch auf einer Oberseite des Grundkörpers 36 auf und erstreckt sich auch in Längserstreckungsrichtung betrachtet über die Enden des Aufnahmeraums 38.

Der Schutzdeckel 40 weist eine abgerundete Aufprallwand 44 auf, welche eine Kante zwischen der Oberseite des Grundkörpers 36 und einer zur Straße weisenden Seitenfläche 46 des Grundkörpers 36 abdeckt. Die Befestigung des Schutzdeckels 40 kann mittels nicht dargestellter Schrauben erfolgen. Durch den Schutzdeckel 40 wird der Aufnahmeraum 38 nach oben zur Geh- oder Fahrfläche 10 begrenzt.

Der Schutzdeckel 40 weist eine Öffnung 48 auf, in die die Ladebuchse 24 mit ihren elektrischen Kontakten 50 aus dem Aufnahmeraum 38 in Richtung zur Oberfläche 42 ragt. Die Ladebuchse 24 wird zur Oberfläche 42 durch einen klapp- beziehungsweise schwenkbaren Buchsendeckel 52 verschlossen. Dieser Buchsendeckel 52 ist über ein als Schwenkachse 54 dienendes Scharnier 56 mit dem Schutzdeckel 40 verbunden und liegt im die Ladebuchse 24 verschließenden Zustand mit seinem äußeren Randbereich auf einer Stufe 58 am Schutzdeckel 40 auf, die an einer radialen Begrenzungswand 60 der Öffnung 48 ausgebildet ist.

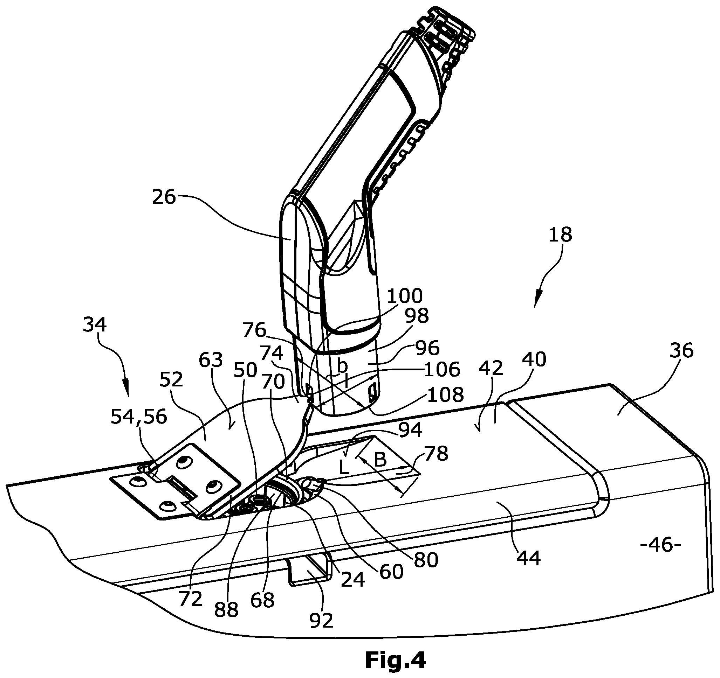

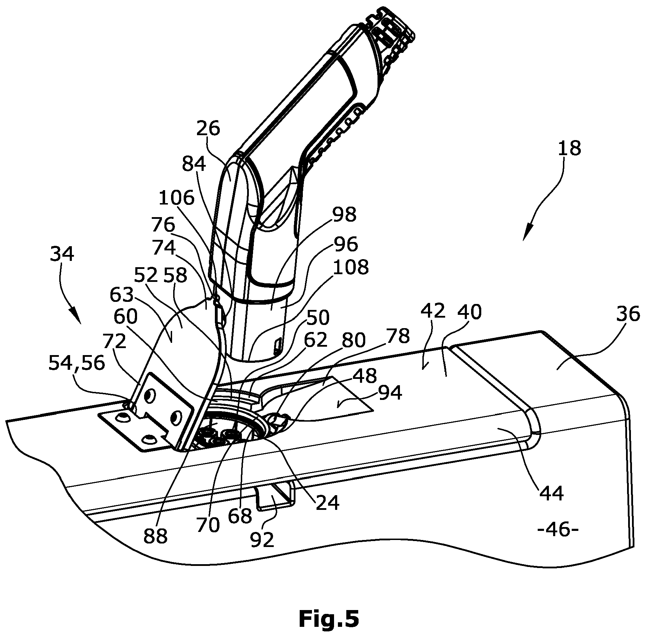

Entsprechend verjüngt sich durch die Stufe 58 die Öffnung 48 in Richtung zum Aufnahmeraum 38. Der Schutzdeckel 40 weist in diesem radial äußeren Bereich die gleiche Höhe auf, wie der oberhalb der Stufe 58 ausgebildete Abschnitt 62 der Begrenzungswand 60, so dass eine Oberfläche 63 des Buchsendeckels 52 mit einer Oberfläche 42 des Schutzdeckels 40 im Wesentlichen eine gemeinsame Ebene und somit einen Teil der Geh- oder Fahrfläche 10 bildet. Der Abschnitt 62 der Begrenzungswand 60 weist, außer im zum Scharnier 56 gegenüberliegenden Bereich des Buchsendeckels 52 lediglich einen Spalt zum Außenumfang des Buchsendeckels 52 auf. Im zur Ladebuchse 24 weisenden inneren Bereich weist der Buchsendeckel 52 einen Vorsprung 66 auf, der im Wesentlichen die gleiche radiale Erstreckung aufweist, wie der in die Öffnung 48 ragende Abschnitt der Ladebuchse 24, so dass dieser Teil dichtend auf die Ladebuchse 24 abgesetzt wird, wenn diese geschlossen ist. Selbstverständlich ist die Höhe der Ladebuchse 24 zum Buchsendeckel 52 und die Höhe der Stufe 58 entsprechend aufeinander abzustimmen. Auch kann in diesem Bereich am Buchsendeckel 52 oder, wie in den Figuren 4 und 5 dargestellt ist, an einer die Ladebuchse 24 radial begrenzenden Außenwand 68 eine Dichtung 70 vorgesehen werden, um ein Eindringen von Wasser in die Ladebuchse 24 im geschlossenen Zustand zu verhindern.

Der Buchsendeckel 52 weist in einem sich an das Scharnier 56 anschließenden Bereich 72 seine größte Breite auf, wobei die Breite in einer Richtung parallel zum Scharnier 56 gemessen wird. Mit dieser Breite erstreckt er sich etwa bis zur Mitte der Ladebuchse 24, von wo aus er sich mit wachsendem Abstand zum Scharnier 56 bis zum vom Scharnier 56 entfernten Bereich 74 verjüngt. An diesem entfernten Bereich 74 ist am Buchsendeckel 52 eine sich in Erstreckungsrichtung des Buchsendeckels 52 vom Außenumfang nach außen gewölbte Ausbuchtung 76 ausgebildet.

Dieser vom Scharnier 56 entfernte Bereich 74 des Buchsendeckels 52 und somit die am Außenumfang des Buchsendeckels 52 ausgebildete Ausbuchtung 76 liegen auch nicht mehr auf der Stufe 58 auf, sondern weisen einen Abstand zum Schutzdeckel 40 auf. Hierzu ist benachbart zu diesem entfernten Bereich 74 des Buchsendeckels 52 am Schutzdeckel 40 eine Vertiefung 78 ausgebildet, durch die auch ein Verriegelungsstift 80 eines Verriegelungsaktors für den Buchsendeckel 52 ragt, der im geschlossenen Zustand in eine korrespondierende Öffnung 82 an der Unterseite des Buchsendeckels 52 eingreift, so dass dieser nicht ohne vorhergehende Authentifizierung geöffnet werden kann. Bei erfolgter Authentifizierung wird der Verriegelungsstift 80 aus der Öffnung 82 ausgefahren und der Buchsendeckel 52 kann vom Benutzer aufgeklappt werden. Diese Öffnung 82 ist an einem Vorsprung 84 an der Unterseite des Buchsendeckels 52 ausgebildet, der sich von der Oberfläche 42 entfernend erstreckt und sich zwischen der Ladebuchse 24 und der Ausbuchtung 76 und somit im vom Scharnier 56 entfernten Bereich 74 des Buchsendeckels 52 befindet.

Wie bereits zuvor beschrieben, befindet sich die Ladebuchse 24 selbst, um nicht über die Oberfläche 42 zu ragen und den Buchsendeckel 52 noch über der Ladebuchse 24 anordnen zu können, unterhalb der Oberfläche 42, so dass normalerweise ein Eindringen von Wasser zumindest beim Öffnen des Buchsendeckels 52 zu befürchten wäre.

Aus diesem Grund wird im Schutzdeckel 40 eine Wasserablaufebene 86 ausgebildet, die die Außenwand 68 der Ladebuchse 24 vollständig radial umgibt und sich bis unter das Scharnier 56 und bis zur Stufe 58 sowie am vom Scharnier 56 entfernten Bereich 74 bis zur Vertiefung 78 erstreckt. Diese Wasserablaufebene 86 befindet sich unterhalb der eine Einstecköffnung 88 begrenzenden Außenwand 68 der Ladebuchse 24 und ist auch unterhalb der Vertiefung 78 angeordnet. Die Wasserablaufebene 86 wird somit radial nach außen durch die radiale Begrenzungswand 60 der Öffnung 48 und radial nach innen durch die Außenwand 68 der Ladebuchse 24 begrenzt.

Die Wasserablaufebene 86 ist schräg abfallend in Richtung einer Ablauföffnung in der Begrenzungswand 60 ausgebildet. Diese Ablauföffnung befindet sich entsprechend am tiefsten Punkt der Wasserablaufebene 86 und mündet in einen Ablaufkanal 92, über den Wasser aus dem Bereich der Ladebuchse 24 abgeführt werden kann.

Die Vertiefung 78 im Schutzdeckel 40 ist ebenfalls als schräg in Richtung zur Wasserablaufebene 86 abfallende ebene Oberfläche 94 ausgebildet, so dass auch Wasser oder Schmutz von der Vertiefung 78 abgeführt wird. Die Breite B der Vertiefung entspricht im Wesentlichen etwa einer Querschnittsbreite b eines Einsteckabschnitts 96 des Steckers 26, der im vorliegenden Ausführungsbeispiel als Typ-2 Stecker ausgebildet ist. Die Länge L wird üblicherweise die entsprechende Querschnittslänge I des Einsteckabschnitts 96 des Steckers 26 überragen. Die Breite B dieser Vertiefung 78 verjüngt sich beidseitig im zur Ladebuchse 24 weisenden Bereich, wobei diese zumindest so zu wählen ist, dass der Stecker 26 gegen die Ausbuchtung 76 des Buchsendeckels 52 entlang der Oberfläche 94 der Vertiefung 78 zu führen ist.

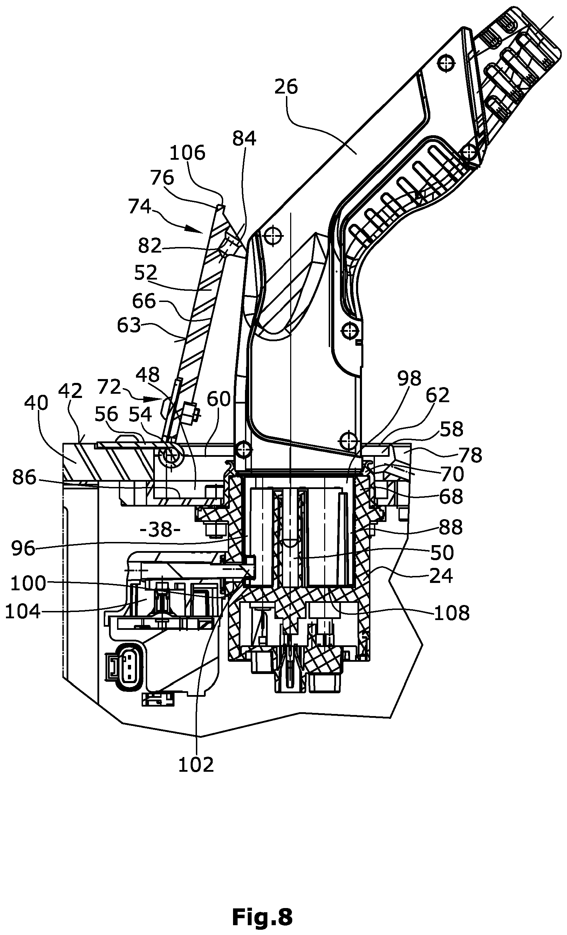

Der Stecker 26 weist an einem Außenumfang seines Gehäuses 98 im Bereich seines Einsteckabschnitts 96 eine Ausnehmung 100 auf, in die bei in die Ladebuchse 24 eingestecktem Stecker 26 ein Bolzen 102 eines Verriegelungsaktors 104 greift, wie in Figur 8 zu erkennen ist. Dies dient zur Vermeidung eines versehentlichen Herausziehens des Steckers 26 während des Ladevorgangs.

Ein nach außen weisendes Ende 106 der Ausbuchtung 76 ist nun so ausgeformt, dass es in der Ausnehmung 100 aufnehmbar ist. Entsprechend ist die Tiefe der Oberfläche 94 der Vertiefung 78 derart zu wählen, dass der Abstand des nach außen weisenden Endes 106 der Ausbuchtung 76 des Buchsendeckels 52 zur Oberfläche 94 mindestens so groß und vorzugsweise nur geringfügig größer ist als der Abstand eines axialen Endes 108 des Einsteckabschnitts 96 des Steckers 26 zur Ausnehmung 100 im Stecker 26.

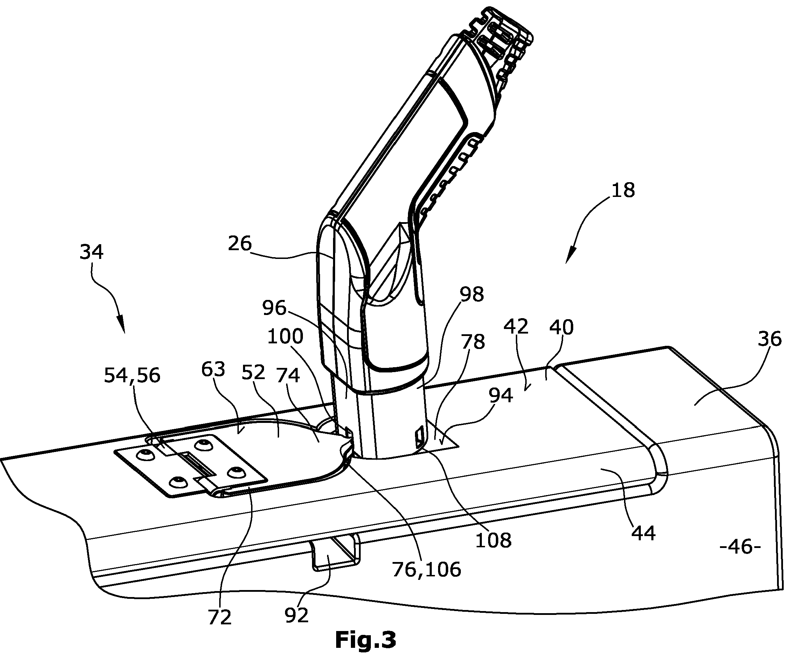

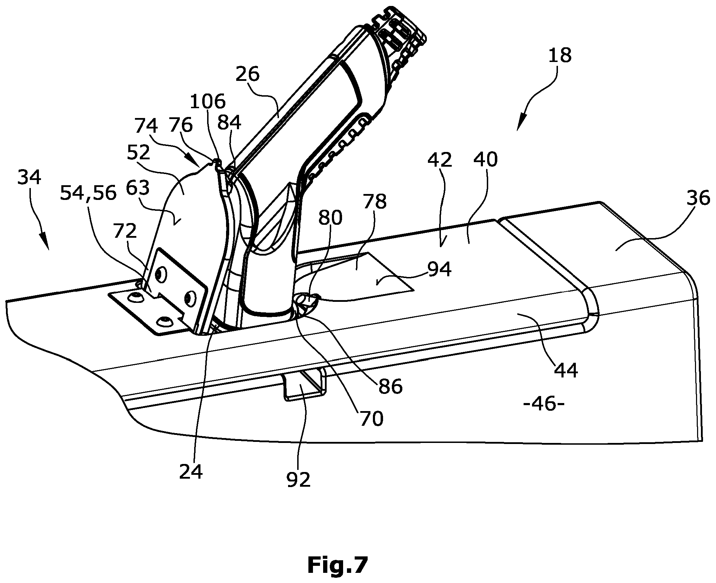

Will nun ein Nutzer sein Fahrzeug aufladen, wird er zunächst authentifiziert, so dass der Verriegelungsstift 80 aus der Öffnung 82 am Buchsendeckel 52 ausgefahren wird. Der Nutzer kann im Folgenden das axiale Ende 108 des Steckers 26 auf die abfallende ebene Oberfläche 94 der Vertiefung 78 aufsetzen und in Richtung des Buchsendeckels 52 verschieben. Mit Erreichen des Buchsendeckels 52 wird die Ausnehmung 100 auf das nach außen weisende Ende 106 der Ausbuchtung 76 geschoben, welches entsprechend in die Ausnehmung 100 eingreift, wie in Figur 3 dargestellt ist. Durch Bewegen des Steckers 26 nach oben wird so automatisch durch den Eingriff des nach außen weisenden Endes 106 der Ausbuchtung 76 der Buchsendeckel 52 um das Scharnier 56 nach oben gedreht und somit die Ladebuchse 24 freigegeben, wie in Figur 4 zu erkennen ist. Der Figur 5 ist zu entnehmen, dass sich durch Weiterführen des Steckers 26 nach oben das nach außen weisende Ende 106 der Ausbuchtung 76 aus der Ausnehmung 100 löst, so dass der Vorsprung 84 gegen das Gehäuse 98 des Einsteckbereichs 96 des Steckers 26 anliegt. Entlang dieses Vorsprungs 84 kann der Stecker 26 dann weiter nach unten geführt werden bis er, wie in Figur 7 dargestellt ist, mit seinem Einsteckbereich 96 in der Einstecköffnung 88 zur Anlage kommt, wodurch gleichzeitig der Kontakt des Steckers 26 zu den elektrischen Kontakten 50 der Ladebuchse 24 hergestellt wird. Mit Beginn des Ladevorgangs wird dann von einer Ladesteuerung der Verriegelungsaktor 104 betätigt, dessen Bolzen 102 in diesem Zustand dann in die Ausnehmung 100 des Steckers 26 greift, so dass dieser gegen ein Herausziehen während des Ladevorgangs gesichert ist, wie in Figur 8 ersichtlich ist.

Es wird somit ein Bordstein-Ladesystem zur Verfügung gestellt, mit dem das Einstecken des Steckers und das hierfür zuvor notwendige Anheben des Buchsendeckels ausschließlich durch die Führung des Steckers verwirklicht werden kann. Ein Anheben des Buchsendeckels von Hand durch den Nutzer ist entsprechend nicht erforderlich, so dass dieser vor Verschmutzungen bewahrt wird. Dennoch wird auch ein Eindringen von Wasser in die Buchse zuverlässig vermieden.

Es sollte deutlich sein, dass verschieden aufgebaute Bordstein-, Randstein,- oder Pflastersteineinheiten verwendet werden können. Auch können die Bordstein-, Randstein,- oder Pflastersteinvorrichtungen mit oder ohne zugehöriger Elektronik aufgebaut werden. Neben der beschriebenen vorteilhaften Ausbildung des Anhebemechanismus für den Buchsendeckel an einer fest installierten Buchse kann dies auch vorteilhaft an Schwenk- oder Hubbuchsen genutzt werden, die zusätzlich durch einen Buchsendeckel verschlossen sind.

## Patentansprüche

1. Bordstein-, Pflasterstein- oder Randstein-Ladesystem zum Laden eines Energiespeichers (30) eines elektrisch angetriebenen Fahrzeugs (32) mit
einer Bordstein-, Pflasterstein- oder Randsteineinheit (34) mit einer im eingebauten Zustand eine Geh- oder Fahrfläche bildenden Oberfläche (42),
einer Ladebuchse (24) mit einer Einstecköffnung (88), über die elektrische Kontakte (50) der Ladebuchse (24) zugänglich sind, und die an der Bordstein-, Pflasterstein- oder Randsteineinheit (34) zumindest indirekt befestigt ist,
einem Stecker (26), der in die Einstecköffnung (88) der Ladebuchse (24) zur Kontaktierung der Kontakte (50) der Ladebuchse (24) einsteckbar ist,
einem Buchsendeckel (52) zur Abdeckung der Einstecköffnung (88) der Ladebuchse (24) außerhalb des Ladevorgangs, der über eine Schwenkachse (54) zur Bordstein-, Pflasterstein- oder Randsteineinheit (34) drehbar gelagert ist,
**dadurch gekennzeichnet, dass**
der Stecker (26) an einem Außenumfang seines Gehäuses (98) eine Ausnehmung (100) aufweist und der Buchsendeckel (52) an seinem Außenumfang gegenüberliegend zur Schwenkachse (54) eine Ausbuchtung (76) aufweist, deren nach außen weisendes Ende (106) in der Ausnehmung (100) aufnehmbar ist.

2. Bordstein-, Pflasterstein- oder Randstein-Ladesystem (18) zum Laden eines Energiespeichers (30) eines elektrisch angetriebenen Fahrzeugs (32) nach Anspruch 1,
**dadurch gekennzeichnet, dass**
das nach außen weisende Ende (106) der Ausbuchtung (76) bezüglich seiner Breite korrespondierend zur Ausnehmung (100) geformt ist.

3. Bordstein-, Pflasterstein- oder Randstein-Ladesystem (18) zum Laden eines Energiespeichers (30) eines elektrisch angetriebenen Fahrzeugs (32) nach Anspruch 1 oder 2,
**dadurch gekennzeichnet, dass**
der Stecker (26) derart zum geschlossenen Buchsendeckel (52) bewegbar ist, dass die Ausbuchtung (76) des Buchsendeckels (52) zumindest teilweise in die Ausnehmung (100) des Steckers (26) greift.

4. Bordstein-, Pflasterstein- oder Randstein-Ladesystem (18) zum Laden eines Energiespeichers (30) eines elektrisch angetriebenen Fahrzeugs (32) nach einem der vorhergehenden Ansprüche,
**dadurch gekennzeichnet, dass**
die Ladebuchse (24) einen Verriegelungsaktor (104) mit einem Bolzen (102) aufweist, der während des Ladevorgangs in die Ausnehmung (100) am Stecker (26) greift.

5. Bordstein-, Pflasterstein- oder Randstein-Ladesystem (18) zum Laden eines Energiespeichers (30) eines elektrisch angetriebenen Fahrzeugs (32) nach einem der vorhergehenden Ansprüche,
**dadurch gekennzeichnet, dass**
eine Oberfläche (63) des Buchsendeckels (52) im Wesentlichen in der gleichen Ebene angeordnet ist, wie die die Geh- oder Fahrfläche bildende Oberfläche (42) der Bordstein-, Pflasterstein- oder Randsteineinheit (34).

6. Bordstein-, Pflasterstein- oder Randstein-Ladesystem (18) zum Laden eines Energiespeichers (30) eines elektrisch angetriebenen Fahrzeugs (32) nach einem der vorhergehenden Ansprüche,
**dadurch gekennzeichnet, dass**
die Oberfläche (42) der Bordstein-, Pflasterstein- oder Randsteineinheit (34) an der zur Ausbuchtung (76) des Buchsendeckels (52) gelegenen Seite der Ladebuchse (24) eine Vertiefung (78) aufweist, deren Oberfläche (94) zumindest im zur Ausbuchtung (76) benachbarten Bereich einen größeren Abstand zur Oberfläche (42) außerhalb der Vertiefung (78) aufweist als ein am weitesten von der Oberfläche (42) außerhalb der Vertiefung (78) entfernter Punkt der Ausbuchtung (76).

7. Bordstein-, Pflasterstein- oder Randstein-Ladesystem (18) zum Laden eines Energiespeichers (30) eines elektrisch angetriebenen Fahrzeugs (32) nach Anspruch 6,
**dadurch gekennzeichnet, dass**
der Abstand einer Oberfläche (94) der Vertiefung (78) im unterhalb der Ausbuchtung (76) des Buchsendeckels (52) der Ladebuchse (24) liegenden Bereich zur Ausbuchtung (76) des Buchsendeckels (52) im Wesentlichen dem Abstand eines axialen Endes (108) des Steckers (26) zur Ausnehmung (100) entspricht.

8. Bordstein-, Pflasterstein- oder Randstein-Ladesystem (18) zum Laden eines Energiespeichers (30) eines elektrisch angetriebenen Fahrzeugs (32) nach Anspruch 6 oder 7,
**dadurch gekennzeichnet, dass**
die Breite (B) der Vertiefung (78) zumindest der Querschnittsbreite (b) eines Einsteckabschnitts (96) des Steckers (26) entspricht und die Länge (L) der Vertiefung (78) in Richtung zum Buchsendeckel (52) mindestens so groß ist wie die Querschnittslänge (I) des Einsteckabschnitts (96) des Steckers (26).

9. Bordstein-, Pflasterstein- oder Randstein-Ladesystem (18) zum Laden eines Energiespeichers (30) eines elektrisch angetriebenen Fahrzeugs (32) nach einem der Ansprüche 6 bis 8,
**dadurch gekennzeichnet, dass**
die Oberfläche (94) der Vertiefung (78) eine gerade Ebene bildet.

10. Bordstein-, Pflasterstein- oder Randstein-Ladesystem (18) zum Laden eines Energiespeichers (30) eines elektrisch angetriebenen Fahrzeugs (32) nach Anspruch 9,
**dadurch gekennzeichnet, dass**
die Oberfläche (94) der Vertiefung (78) parallel zur die Geh- oder Fahrfläche bildenden Oberfläche (42) der Bordstein-, Pflasterstein- oder Randsteineinheit (34) angeordnet ist.

11. Bordstein-, Pflasterstein- oder Randstein-Ladesystem (18) zum Laden eines Energiespeichers (30) eines elektrisch angetriebenen Fahrzeugs (32) nach einem der Ansprüche 6 bis 9,
**dadurch gekennzeichnet, dass**
die Oberfläche (94) der Vertiefung (78) zur Ladebuchse (24) hin schräg abfallend ausgebildet ist.

12. Bordstein-, Pflasterstein- oder Randstein-Ladesystem (18) zum Laden eines Energiespeichers (30) eines elektrisch angetriebenen Fahrzeugs (32) nach Anspruch 11,
**dadurch gekennzeichnet, dass**
die Ladebuchse (24) von einer Wasserablaufebene (86) umgeben ist, zu der die Oberfläche (94) der Vertiefung (78) schräg abfallend ausgebildet ist.

13. Bordstein-, Pflasterstein- oder Randstein-Ladesystem (18) zum Laden eines Energiespeichers (30) eines elektrisch angetriebenen Fahrzeugs (32) nach einem der Ansprüche 6 bis 12,
**dadurch gekennzeichnet, dass**
die Vertiefung (78) an einem Schutzdeckel (40) der Bordstein-, Pflasterstein- oder Randsteineinheit (34) ausgebildet ist.

14. Bordstein-, Pflasterstein- oder Randstein-Ladesystem (18) zum Laden eines Energiespeichers (30) eines elektrisch angetriebenen Fahrzeugs (32) nach Anspruch 13,
**dadurch gekennzeichnet, dass**
der Buchsendeckel (52) über ein Scharnier (56) am Schutzdeckel (40) befestigt ist.

15. Bordstein-, Pflasterstein- oder Randstein-Ladesystem (18) zum Laden eines Energiespeichers (30) eines elektrisch angetriebenen Fahrzeugs (32) nach einem der vorhergehenden Ansprüche,
**dadurch gekennzeichnet, dass**
am Buchsendeckel (52) ein Vorsprung (84) ausgebildet ist, der zur Ausbuchtung (76) in Richtung des Scharniers (56) versetzt angeordnet ist und sich von einer Unterseite des Buchsendeckels (52) in die Vertiefung (78) erstreckt und der im geschlossenen Zustand der Ladebuchse (24) zwischen der Ladebuchse (24) und der Ausbuchtung (76) angeordnet ist.

16. Bordstein-, Pflasterstein- oder Randstein-Ladesystem (18) zum Laden eines Energiespeichers (30) eines elektrisch angetriebenen Fahrzeugs (32) nach einem der vorhergehenden Ansprüche,
**dadurch gekennzeichnet, dass**
im Vorsprung (84) des Buchsendeckels (52) eine Öffnung (82) ausgebildet ist, in die außerhalb des Ladevorgangs bei geschlossenem Buchsendeckel (52) ein Verriegelungsstift (80) eines Verriegelungsaktors greift.

## Claims

1. Curb stone or paving stone charging system for charging an energy store (30) of an electrically driven vehicle (32), comprising
a curb stone or paving stone unit (34) with a surface (42) defining a walking or driving surface in the installed state,
a charging socket (24) with an insertion opening (88) via which electrical contacts (50) of the charging socket (24) are accessible and which is at least indirectly attached to the curb stone or paving stone unit (34),
a plug (26) which can be inserted into the insertion opening (88) of the charging socket (24) for contacting the contacts (50) of the charging socket (24),
a socket cover (52) for covering the insertion opening (88) of the charging socket (24) temporally outside the charging process, which is rotatably mounted via a pivot axis (54) to the curb stone or paving stone unit (34), **characterized in that**
the plug (26) has a recess (100) on an outer circumference of its housing (98) and the socket cover (52) has a bulge (76) on its outer circumference opposite the pivot axis (54), the outwardly pointing end (106) of which can be received in the recess (100).

2. Curb stone or paving stone charging system (18) for charging an energy store (30) of an electrically driven vehicle (32) according to Claim 1, **characterized in that**
the outwardly pointing end (106) of the bulge (76) is shaped with respect to its width corresponding to the recess (100).

3. Curb stone or paving stone charging system (18) for charging an energy store (30) of an electrically driven vehicle (32) according to claim 1 or 2, **characterized in that**
the plug (26) can be moved to the closed socket cover (52) such that the bulge (76) of the socket cover (52) at least partially engages in the recess (100) of the plug (26).

4. Curb stone or paving stone charging system (18) for charging an energy store (30) of an electrically driven vehicle (32) according to one of the preceding claims,
**characterized in that**
the charging socket (24) has a locking actuator (104) with a bolt (102) which engages in the recess (100) on the plug (26) during the charging process.

5. Curb stone or paving stone charging system (18) for charging an energy store (30) of an electrically driven vehicle (32) according to one of the preceding claims,
**characterized in that**
a surface (63) of the socket cover (52) is arranged substantially in the same plane as the surface (42) of the curb stone or paving stone unit (34) defining the walking or driving surface.

6. Curb stone or paving stone charging system (18) for charging an energy store (30) of an electrically driven vehicle (32) according to one of the preceding claims,
**characterized in that**
the surface (42) of the curb stone or paving stone unit (34) has a depression (78) on the side of the charging socket (24) facing the bulge (76) of the socket cover (52), the surface (94) of which has a greater distance from the surface (42) outside the depression (78) at least in the region adjacent to the bulge (76) than a point of the bulge (76) furthest away from the surface (42) outside the depression (78).

7. Curb stone or paving stone charging system (18) for charging an energy store (30) of an electrically driven vehicle (32) according to Claim 6, **characterized in that**
the distance of a surface (94) of the depression (78) in the region lying below the bulge (76) of the socket cover (52) of the charging socket (24) from the bulge (76) of the socket cover (52) substantially corresponds to the distance of an axial end (108) of the plug (26) from the recess (100).

8. Curb stone or paving stone charging system (18) for charging an energy store (30) of an electrically driven vehicle (32) according to claim 6 or 7, **characterized in that**
the width (B) of the depression (78) corresponds at least to the cross-sectional width (b) of an insertion section (96) of the plug (26) and the length (L) of the depression (78) in the direction towards the socket cover (52) is at least as great as the cross-sectional length (l) of the insertion section (96) of the plug (26).

9. Curb stone or paving stone charging system (18) for charging an energy store (30) of an electrically driven vehicle (32) according to one of claims 6 to 8,
**characterized in that**
the surface (94) of the depression (78) forms a straight plane.

10. Curb stone or paving stone charging system (18) for charging an energy store (30) of an electrically driven vehicle (32) according to claim 9, **characterized in that**
the surface (94) of the depression (78) is arranged parallel to the surface (42) of the curb stone or paving stone unit (34) defining the walking or driving surface.

11. Curb stone or paving stone charging system (18) for charging an energy store (30) of an electrically driven vehicle (32) according to one of claims 6 to 9,
**characterized in that**
the surface (94) of the depression (78) slopes obliquely towards the charging socket (24).

12. Curb stone or paving stone charging system (18) for charging an energy store (30) of an electrically driven vehicle (32) according to claim 11, **characterized in that**
the charging socket (24) is surrounded by a water drainage plane (86) to which the surface (94) of the depression (78) slopes obliquely.

13. Curb stone or paving stone charging system (18) for charging an energy store (30) of an electrically driven vehicle (32) according to one of claims 6 to 12,
**characterized in that**
the depression (78) is formed on a protective cover (40) of the curb stone or paving stone unit (34).

14. Curb stone or paving stone charging system (18) for charging an energy store (30) of an electrically driven vehicle (32) according to claim 13, **characterized in that**
the socket cover (52) is attached to the protective cover (40) via a hinge (56).

15. Curb stone or paving stone charging system (18) for charging an energy store (30) of an electrically driven vehicle (32) according to one of the preceding claims,
**characterized in that**
a projection (84) is provided at the socket cover (52), which is arranged offset from the bulge (76) in the direction of the hinge (56) and extends from an underside of the socket cover (52) into the depression (78) and which is arranged between the charging socket (24) and the bulge (76) in the closed state of the charging socket (24).

16. Curb stone or paving stone charging system (18) for charging an energy store (30) of an electrically driven vehicle (32) according to one of the preceding claims,
**characterized in that**
an opening (82) is provided in the projection (84) of the socket cover (52), in which a locking pin (80) of a locking actuator engages outside the charging process when the socket cover (52) is closed.

## Revendications

1. Système de charge de bordure de trottoir ou de pavé pour charger un accumulateur d'énergie (30) d'un véhicule à propulsion électrique (32), comprenant
une unité de bordure de trottoir ou de pavé (34) avec une surface (42) formant une surface de marche ou de roulement à l'état monté,
une prise de charge (24) avec une ouverture d'enfichage (88), par le biais de laquelle des contacts électriques (50) de la prise de charge (24) sont accessibles, et qui est fixée au moins indirectement à l'unité de bordure de trottoir ou de pavé (34),
une fiche (26), qui peut être enfichée dans l'ouverture d'enfichage (88) de la prise de charge (24) pour établir le contact avec les contacts (50) de la prise de charge (24),
un couvercle de prise (52) pour recouvrir l'ouverture d'enfichage (88) de la prise de charge (24) en dehors du processus de charge, qui est supporté de manière rotative par le biais d'un axe de pivotement (54) par rapport à l'unité de bordure de trottoir ou de pavé (34),
**caractérisé en ce que**
la fiche (26) présente un évidement (100) au niveau d'une périphérie extérieure de son boîtier (98) et le couvercle de prise (52) présente au niveau de sa périphérie extérieure, à l'opposé de l'axe de pivotement (54), un renflement (76), dont l'extrémité (106) tournée vers l'extérieur peut être reçue dans l'évidement (100).

2. Système de charge de bordure de trottoir ou de pavé (18) pour charger un accumulateur d'énergie (30) d'un véhicule à propulsion électrique (32) selon la revendication 1,
**caractérisé en ce que**
l'extrémité (106) tournée vers l'extérieur du renflement (76) est formée par rapport à sa largeur de manière correspondante à l'évidement (100).

3. Système de charge de bordure de trottoir ou de pavé (18) pour charger un accumulateur d'énergie (30) d'un véhicule à propulsion électrique (32) selon la revendication 1 ou 2,
**caractérisé en ce que**
la fiche (26) peut être déplacée par rapport au couvercle de prise fermé (52) de telle sorte que le renflement (76) du couvercle de prise (52) vienne en prise au moins en partie dans l'évidement (100) de la fiche (26).

4. Système de charge de bordure de trottoir ou de pavé (18) pour charger un accumulateur d'énergie (30) d'un véhicule à propulsion électrique (32) selon l'une quelconque des revendications précédentes,
**caractérisé en ce que**
la prise de charge (24) présente un actionneur de verrouillage (104) avec un boulon (102), qui vient en prise pendant le processus de charge dans l'évidement (100) au niveau de la fiche (26).

5. Système de charge de bordure de trottoir ou de pavé (18) pour charger un accumulateur d'énergie (30) d'un véhicule à propulsion électrique (32) selon l'une quelconque des revendications précédentes,
**caractérisé en ce que**
une surface (63) du couvercle de prise (52) est disposée sensiblement dans le même plan que la surface (42) formant la surface de marche ou de roulement de l'unité de bordure de trottoir ou de pavé (34).

6. Système de charge de bordure de trottoir ou de pavé (18) pour charger un accumulateur d'énergie (30) d'un véhicule à propulsion électrique (32) selon l'une quelconque des revendications précédentes,
**caractérisé en ce que**
la surface (42) de l'unité de bordure de trottoir ou de pavé (34) présente au niveau du côté de la prise de charge (24) situé par rapport au renflement (76) du couvercle de prise (52) un renfoncement (78), dont la surface (94) présente au moins dans la région adjacente au renflement (76) une plus grande distance par rapport à la surface (42) en dehors du renfoncement (78) qu'un point du renflement (76) le plus éloigné de la surface (42) en dehors du renfoncement (78).

7. Système de charge de bordure de trottoir ou de pavé (18) pour charger un accumulateur d'énergie (30) d'un véhicule à propulsion électrique (32) selon la revendication 6,
**caractérisé en ce que**
la distance d'une surface (94) du renfoncement (78) dans la région située au-dessous du renflement (76) du couvercle de prise (52) de la prise de charge (24) par rapport au renflement (76) du couvercle de prise (52) correspond sensiblement à la distance d'une extrémité axiale (108) de la fiche (26) par rapport à l'évidement (100).

8. Système de charge de bordure de trottoir ou de pavé (18) pour charger un accumulateur d'énergie (30) d'un véhicule à propulsion électrique (32) selon la revendication 6 ou 7,
**caractérisé en ce que**
la largeur (B) du renfoncement (78) correspond au moins à la largeur de section transversale (b) d'une portion d'enfichage (96) de la fiche (26) et la longueur (L) du renfoncement (78) dans la direction du couvercle de prise (52) est au moins aussi grande que la longueur de section transversale (l) de la portion d'enfichage (96) de la fiche (26).

9. Système de charge de bordure de trottoir ou de pavé (18) pour charger un accumulateur d'énergie (30) d'un véhicule à propulsion électrique (32) selon l'une quelconque des revendications 6 à 8,
**caractérisé en ce que**
la surface (94) du renfoncement (78) forme un plan droit.

10. Système de charge de bordure de trottoir ou de pavé (18) pour charger un accumulateur d'énergie (30) d'un véhicule à propulsion électrique (32) selon la revendication 9,
**caractérisé en ce que**
la surface (94) du renfoncement (78) est disposée parallèlement à la surface (42) formant la surface de marche ou de roulement de l'unité de bordure de trottoir ou de pavé (34).

11. Système de charge de bordure de trottoir ou de pavé (18) pour charger un accumulateur d'énergie (30) d'un véhicule à propulsion électrique (32) selon l'une quelconque des revendications 6 à 9,
**caractérisé en ce que**
la surface (94) du renfoncement (78) est réalisée de manière inclinée vers la prise de charge (24).

12. Système de charge de bordure de trottoir ou de pavé (18) pour charger un accumulateur d'énergie (30) d'un véhicule à propulsion électrique (32) selon la revendication 11,
**caractérisé en ce que**
la prise de charge (24) est entourée par un plan d'écoulement d'eau (86), par rapport auquel la surface (94) du renfoncement (78) est réalisée de manière inclinée.

13. Système de charge de bordure de trottoir ou de pavé (18) pour charger un accumulateur d'énergie (30) d'un véhicule à propulsion électrique (32) selon l'une quelconque des revendications 6 à 12,
**caractérisé en ce que**
le renfoncement (78) est réalisé au niveau d'un couvercle de protection (40) de l'unité de bordure de trottoir ou de pavé (34).

14. Système de charge de bordure de trottoir ou de pavé (18) pour charger un accumulateur d'énergie (30) d'un véhicule à propulsion électrique (32) selon la revendication 13,
**caractérisé en ce que**
le couvercle de prise (52) est fixé au couvercle de protection (40) par le biais d'une charnière (56).

15. Système de charge de bordure de trottoir ou de pavé (18) pour charger un accumulateur d'énergie (30) d'un véhicule à propulsion électrique (32) selon l'une quelconque des revendications précédentes,
**caractérisé en ce que**
une saillie (84) est réalisée au niveau du couvercle de prise (52), laquelle est disposée de manière décalée par rapport au renflement (76) dans la direction de la charnière (56) et s'étend depuis un côté inférieur du couvercle de prise (52) dans le renfoncement (78) et qui est disposée dans l'état fermé de la prise de charge (24) entre la prise de charge (24) et le renflement (76).

16. Système de charge de bordure de trottoir ou de pavé (18) pour charger un accumulateur d'énergie (30) d'un véhicule à propulsion électrique (32) selon l'une quelconque des revendications précédentes,
**caractérisé en ce que**
une ouverture (82) est réalisée dans la saillie (84) du couvercle de prise (52), dans laquelle une goupille de verrouillage (80) d'un actionneur de verrouillage vient en prise en dehors du processus de charge lorsque le couvercle de prise (52) est fermé.
